# EUROPÄISCHE PATENTSCHRIFT

(11) **EP 2 964 992 B1**
(45) Veröffentlichungstag und Bekanntmachung des Hinweises auf die Patenterteilung: **04.10.2017**
(21) Anmeldenummer: 14710989.6
(22) Anmeldetag: 24.02.2014
(51) Int. Cl.: F16L 37/084, F16L 37/098, F16L 37/14

(54) **STECKVERBINDUNG FÜR ZWEI ROHRE UND VERFAHREN ZUR MONTAGE DER STECKVERBINDUNG**
PLUG-IN CONNECTION FOR TWO PIPES AND METHOD FOR ASSEMBLING THE PLUG-IN CONNECTION
RACCORD À EMBOÎTEMENT POUR DEUX TUBES ET PROCÉDÉ DE MONTAGE DU RACCORD À EMBOÎTEMENT

(30) Priorität: 07.03.2013 DE 102013102252
(43) Veröffentlichungstag der Anmeldung: 13.01.2016
(73) Patentinhaber: Fränkische Industrial Pipes GmbH & Co. KG, 97486 Königsberg (DE); Volkswagen AG, 38440 Wolfsburg (DE)
(72) Erfinder: ROSIN, Volker, 29378 Wittingen (DE); SCHRÖTER, Sören, 96103 Hallstadt (DE)
(74) Vertreter: Reichert & Lindner Partnerschaft Patentanwälte
(86) Internationale Anmeldenummer: PCT/IB2014/059200
(87) Internationale Veröffentlichungsnummer: WO 2014/136014

(56) Entgegenhaltungen:
- EP-A1- 1 526 320
- EP-A1- 2 012 052
- DE-A1- 19 713 446
- US-A- 4 453 747

## Beschreibung

Die Erfindung bezieht sich auf eine Steckverbindung für ein erstes Rohr und ein zweites Rohr. Im Besonderen ist ein freier Endabschnitt des ersten Rohres in einen freien Endabschnitt des zweiten Rohres aufgenommen. Hierzu ist eine Halteklammer mit zwei Schenkeln vorgesehen, von denen jeder ein Verrastelement trägt. Am freien Endabschnitt des ersten Rohres ist eine Führung für die Halteklammer ausgeformt. Ferner bezieht sich die Erfindung auf ein Verfahren zur Montage und Demontage einer Steckverbindung für ein erstes Rohr und ein zweites Rohr.

Die deutsche Patentschrift DE 44 29 498 C1 offenbart eine Steckkupplung zum Verbinden einer Fluidleitung mit einem Rohr. Die Steckkupplung ist an einem abgewinkelten Rohrstück vorgesehen, dessen Endabschnitt mit der Fluidleitung verbindbar ist. Der Endabschnitt der Fluidleitung wird mit dem Rohr zusammengesteckt und über Haltearme mit dem Rohr verbunden. Eine Verdrehsicherung hält das Rohr in einer definierten Drehwinkellage, so dass die Fluidleitung und das Rohr in unterschiedlichen relativen Drehwinkellagen drehfest miteinander verbunden werden können. Die Trennung von Fluidleitung und Rohr wird durch Zusammendrücken eines ovalen Ringteils ermöglicht, das die Steckkupplung umgibt. Durch das Zusammendrücken gelangen Rastnasen außer Eingriff mit Halterippen, so dass Fluidleitung und das Rohr getrennt werden können.

Die deutsche Patentschrift DE 199 46 260 C1 zeigt eine Schnellkupplung für Schläuche oder Rohrleitungen mit einem Kupplungsgehäuse. Es ist ein Stecknippel und ein Verriegelungselement vorgeschlagen, wobei ein Verriegeln und Lösen der Verriegelungen von einer Seite des Kupplungsgehäuses erfolgt. Die Zugänglichkeit zu der Schnellkupplung erfolgt von außen her und es ist ein Schutz des Inneren der Schnellkupplung vor Verschmutzungen erreicht.

Die deutsche Offenlegungsschrift DE 34 40 783 A1 zeigt eine Leitungskupplung mit einem eine umlaufende Anlageschulter aufweisenden Kupplungsnippel. Der Kupplungsnippel ist in eine Kupplungshülse einführbar. Ein Verschlussstück greift in einer Verschlussstellung mit zwei etwa parallel verlaufenden Schenkeln seitlich an der Anlageschulter an. Die Schenkel greifen im Bereich ihrer Enden an keilartig angeordneten Führungsflächen an. Die Führungsflächen sind derart angeordnet, dass sie den Verschlusskörper in Richtung auf die Verschlussstellung beaufschlagen.

Das US-Patent 5,607,192 offenbart eine Leitungsverbindung für ein Wasserreinigungssystem. Die Leitungsverbindung umfasst eine Aufnahme am Wasserreinigungssystem und ein Positioniermittel, das ein Verbindungsmittel für die Leitung am Wasserreinigungssystem befestigt. Das Positioniermittel haltert die Leitung mittels eines C-förmigen Halteabschnitts.

Die europäische Patentschrift EP 1 559 944 B1 offenbart ebenfalls eine Steckkupplung zum Verbinden einer Fluidleitung mit einem Rohr. Der Endabschnitt des Rohrs ist mit dem Endabschnitt der Fluidleitung zusammensteckbar, wobei elastische Haltearme eines aufweitbaren Kupplungsringteils die Fluidleitung und das Rohr im verbundenen Zustand halten. Der Kupplungsringteil hat über einen Umfangswinkelbereich verteilte Rastabschnitte, die beim Einkuppeln über die Halterippe, unter Aufweitung des Kupplungsringteils, hinweggleiten und hinter der Halterippe einrasten. Durch manuelles Zusammendrücken der Enden seiner großen Achse ist der Kupplungsringteil zusammen mit den Rastabschnitten aufweitbar, um die Kupplung zu lösen. Um aus Sicherheitsgründen zu verhindern, dass die Steckkupplung manuell lösbar ist, hat der Kupplungsringteil wenigstens drei Rastabschnitte und der Umfangswinkelbereich ist größer als 180°. Wenn manuell versucht würde, den Kupplungsringteil zu verformen, um die Kupplung zu lösen, bliebe mindestens ein Rastabschnitt immer hinter der Halterippe eingerastet.

Die europäische Patentanmeldung EP 1 526 320 A1 offenbart ebenfalls eine Rohrverbindung. In die Rohrverbindung ist ein steifes bzw. starres Rohr einsetzbar. Das starre Rohr hat ein distales Ende mit einem Halteflansch ausgebildet. Die Rohrverbindung umfasst ferner einen Rohrverbindungskörper, der mit einer axial verlaufenden Bohrung ausgebildet ist, die ein offenes Ende hat, durch welches das starre Rohr in die Bohrung einsetzbar ist. Das andere Ende ist an andere Rohrleitungen anschließbar. Der Rohrverbindungskörper hat ferner ein Fenster in Verbindung mit der Bohrung ausgebildet. Ein Rohrhalter ist ferner mit einem Arretierstück versehen, welches sich durch das Fenster erstreckt. Das Arretierstück rückt in die Bohrung vor und zurück, wenn der Rohrhalter relativ zu dem Rohrverbindungskörper in eine Richtung senkrecht zu einer Richtung, in der das starre Rohr in die Bohrung eingesetzt wird, von einer zweiten Position in einer ersten Position bewegt wird. Das Arretierstück erlaubt dem Halteflansch, hindurchzugehen, wenn der Rohrhalter in der ersten Position ist. Das Arretierstück greift in eine Rückseite des Halteflansches ein, um dadurch die Bewegung des starren Rohres in einer Entfernungsrichtung zu begrenzen, wenn der Rohrhalter in der zweiten Position ist.

Die europäische Patentanmeldung EP 2 012 052 A1 offenbart ebenfalls ein Kupplungssystem zum Verbinden eines Schlauches mit einer Anschlussbuchse mittels eines vom Schlauch und von der Anschlussbuchse separat ausgebildeten Verbindungselements. Der Schlauch weist an zumindest einem seiner Enden einen Anschlussstutzen auf, der in die Anschlussbuchse einsteckbar oder auf diese aufsteckbar ist. Das Verbindungselement ist am Ende des Anschlussstutzen des Schlauchs mittels einer Rastverbindung in axialer Richtung des Schlauches fixierbar.

Die deutsche Patentanmeldung DE 197 13 446 A1 offenbart ebenfalls eine Kupplung für Kraftstoffleitungen oder dergleichen. Ein mit einer ersten Kraftstoffleitung verbundener, erster Kupplungsteil ist mit seinem Einsteckabschnitt axial in einen Aufsteckabschnitt eines, mit einer zweiten Kraftstoffleitung verbundenen zweiten Kupplungsteiles eingesetzt. Die beiden fluiddicht ineinandergesteckten, einen Durchgangskanal für den Kraftstoff bildenden Kupplungsteile sind durch eine Haltevorrichtung miteinander verbunden, die zumindest ein Paar beim Ineinanderstecken der beiden Kupplungsteile axial ineinanderschiebbare und jeweils an einem Kupplungsteil exzentrisch zum Durchgangskanal angeordnete Sperrelemente umfasst, zwischen denen, bei fluiddicht ineinandergesteckten Kupplungsteilen, ein Bewegungsspiel vorgesehen ist, das die gegenseitige Verdrehbarkeit der beiden Kupplungsteile auf den durch das Bewegungsspiel vorgegebenen Drehweg begrenzt. Die Haltevorrichtung umfasst ferner zumindest zwei Verriegelungselemente, die bei fluiddicht ineinandergesteckten Kupplungsteilen und axial ineinandergeschobenen Sperrelementen zum gegenseitigen Festhalten der beiden Kupplungsteile miteinander in Eingriff bringbar sind.

Das US- Patent US 4,453,747 offenbart eine Steckverbindung für ein erstes Rohr und ein zweites Rohr. Hierzu ist eine Halteklammer mit zwei Schenkeln vorgesehen. Eine Führung für die Halteklammer ist hierzu am freien Endabschnitt des ersten Rohres ausgeformt. Die Führung wirkt mit einer Manschette für die Halteklammer zusammen. Die Halteklammer weist zwei scharfkantige Beinabschnitte auf, die in die Führung eingesetzt werden. Dabei drücken die Schenkel auf das zweite Rohr, um eine kraftschlüssige Befestigung zu erzielen.

Der oben beschriebene Stand der Technik erlaubt es nicht, dass die Steckverbindung zwischen den zwei verbundenen Rohren auf einfache manuelle Weise gelöst werden kann. Hinzu kommt, dass die Rohrverbindung in der Regel im Außenbereich eines Kraftfahrzeugs angebracht und Verschmutzungen ausgesetzt ist. Verschmutzungen im Bereich der Verbindungsstelle der beiden Rohre erschweren ferner das Trennen der Steckverbindung.

Aufgabe der Erfindung ist, eine Steckverbindung für zwei Rohre vorzuschlagen, die eine einfache Montage und Demontage ermöglich und zugleich einen sicheren Sitz der Verbindung der beiden Rohre gewährleistet.

Diese Aufgabe wird mittels der Steckverbindung für ein erstes Rohr und ein zweites Rohr gelöst, die die Merkmale des Patentanspruchs 1 umfasst.

Eine weitere Aufgabe der Erfindung ist, ein Verfahren zur Montage einer Steckverbindung für zwei Rohre vorzuschlagen, die eine einfache Montage und auch Demontage ermöglicht und zugleich einen sicheren Sitz der Verbindung der beiden Rohre gewährleistet.

Diese Aufgabe wird mittels eines Verfahrens zur Montage einer Steckverbindung für ein erstes Rohr und ein zweites Rohr gelöst, das die Merkmale des Patentanspruchs 7 umfasst.

Zur Ausbildung der Steckverbindung für das erste Rohr und das zweite Rohr, nimmt ein freier Endabschnitt des ersten Rohres einen freien Endabschnitt des zweiten Rohres auf. Die Steckverbindung hat eine Halteklammer mit zwei Schenkeln, von denen jeder ein Verrastelement trägt. Am freien Endabschnitt des ersten Rohres ist eine Führung für die Halteklammer ausgeformt. Am freien Endabschnitt des zweiten Rohres ist ein Haltebereich ausgeformt, wobei die in der Führung sitzende Halteklammer mit jedem der Verrastelemente form- und kraftschlüssig mit dem Haltebereich am freien Endabschnitt des zweiten Rohres zusammenwirkt. Die Führung für die Halteklammer hat den Vorteil, dass diese von Außen in die Führung eingesetzt werden kann. Ist die Halteklammer in der Führung befestigt, dann ist der Bereich der Führung gegenüber äußere Einflüsse, wie z.B. Schmutz, Wasser etc., abgeschottet. Hierzu hat die Halteklammer zwei Schenkel ausgebildet, von denen jeder ein Verrastelement trägt. Die Verrastelemente wirken form- und kraftschlüssig mit dem sektorförmigen Haltebereich am freien Endabschnitt des zweiten Rohres zusammen, so dass das erste Rohr mit dem zweiten Rohr verbunden ist. Eine Anlage eines jeden Verrastelements liegt an einem Keilelement der Führung, so dass die Abschirmung durch das Halteelement nach außen hin erreicht wird. Ein weiterer Vorteil der Erfindung ist, dass das Halteelement im Wesentlichen ohne Werkzeug gelöst werden kann. Dadurch können auf einfache Weise das erste Rohr und das zweite Rohr wieder voneinander getrennt werden.

Der Endabschnitt des zweiten Rohres hat eine Nase ausgeformt, die in eine Aussparung des Endabschnitts des ersten Rohres greift, so dass ein lagerichtiger Verbau des ersten Rohres mit dem zweiten Rohr gegeben ist. Durch das Zusammenwirken der Nase und der Aussparung ist somit eine Verdrehsicherung zwischen dem ersten Rohr und dem zweiten Rohr gegeben.

Der Haltebereich am freien Endabschnitt des zweiten Rohres hat zwei gegenüberliegende Anschläge ausgeformt, die mit einem entsprechenden Absatz eines jeden Verrastelements der Halteklammer zusammenwirken. Dabei liegen die Verrastelemente zumindest teilweise an einem Sektorbereich des Haltebereichs an. Die zwei gegenüberliegenden Anschläge können zueinander zwischen 90° und 180° beabstandet sein.

Der freie Endabschnitt des zweiten Rohres trägt einen O-Ring und ein O-Ringhalteelement. Im freien Endabschnitt des zweiten Rohres sitzen der O-Ring und das O-Ringhalteelement, so dass diese dort geschützt sind. Der O-Ring wirkt dichtend mit einer Innenfläche des freien Endabschnitts des ersten Rohres und einer Außenfläche des freien Endabschnitts des zweiten Rohres zusammen.

Ein Bügel verbindet die zwei Schenkel der Halteklammer und hat an einer durch einen Benutzer oder Werkzeug zugänglichen Seite eine geriffelte Grifffläche ausgebildet. Unterhalb der Grifffläche ist mindestens eine Aussparung ausgebildet, die in einen Vorsprung der Führung für die Halteklammer greift, wenn diese in die Führung eingesetzt ist.

Durch die erfindungsgemäße Ausgestaltung der Steckverbindung ist auch das Verfahren zur Montage und Demontage der Steckverbindung für das erste Rohr und das zweite Rohr vereinfacht. Hierzu erfolgt zunächst ein Einschieben des freien Endabschnitts des zweiten Rohres in den freien Endabschnitt des ersten Rohres. Mit dem Einsetzen einer Halteklammer in die Führung am freien Endabschnitt des ersten Rohres wird die Verbindung gesichert. Hierzu hat die Halteklammer zwei Schenkel, von denen jeder ein Verrastelement trägt. Die Verrastelemente wirken form- und kraftschlüssig mit dem Haltebereich am freien Endabschnitt des zweiten Rohres zusammen, so dass das erste Rohr mit dem zweiten Rohr verbunden ist.

Eine Demontage der Steckverbindung wird dadurch erreicht, dass auf die geriffelte Grifffläche der in der Führung sitzenden Halteklammer durch den Benutzer oder mittels eines Werkzeugs gedrückt wird. Dadurch werden die Verrastelemente der Schenkel über ein Keilelement der Führung in Zusammenwirkung mit je einer Anlage der Verrastelemente außer Eingriff mit dem Haltebereich am freien Endabschnitt des zweiten Rohres gebracht. Das erste Rohr und das zweite Rohr können nun auseinandergezogen bzw. getrennt werden.

Die Erfindung findet in einem Kraftfahrzeug Anwendung, wobei die ein Fluid führenden Leitungen mittels der erfindungsgemäßen Steckverbindung verbunden werden. Die Verrastung der Steckverbindung erfolgt mittels der Halteklammer. Der Verrastbereich beträgt mindestens 180°.

Das Rohr mit zugehörigem Endabschnitt und der Verdrehsicherung ist so ausgeführt, dass hierbei eine Entformung aus dem Spritzgießwerkzeug dadurch erfolgen kann, dass in einem Verrastbereich von mindestens 180° ein entsprechender Hinterschnitt vorhanden ist. Im weiteren Verrastbereich von mindestens 90° - 180° ist eine einfache Entformung mittels eines Schiebers möglich. Dadurch ergibt sich der Vorteil, dass eine Flanke (90° - 180°) ohne Hinterschnitt aus dem Werkzeug entformt werden kann. Das erfindungsgemäße Ausführungsbeispiel ist weniger anfällig gegen Verschmutzung und kann mit geringem Kraftaufwand montiert und demontiert werden. Zur Montage des zweiten Rohrs in der Steckverbindung ist keine Betätigung der Halteklammer erforderlich. Zur Demontage muss die Halteklammer entsprechend betätigt werden und gibt danach das zweite Rohr entsprechend zur Demontage frei. Weiterhin ist der innenliegende O-Ring durch den Endbereich des erstens Rohres geschützt und dichtet im Gegensatz zu den bekannten Lösungen nicht nach außen, sondern nach innen ab.

Die Erfindung findet in allen Fahrzeugen Anwendung, bei denen ein Rohr oder Schlauch an ein Behältnis befestigt werden muss oder bei dem generell zwei Rohre miteinander verbunden werden müssen. Die zwei Rohre könne z.B. zum Führen von Kraftstoff ausgebildet sein. Für den Fall, dass ein flexibler Schlauch verwendet wird, ist es sinnvoll die freien Endabschnitte der Rohre bzw. Schläuche formstabil auszubilden, damit eine dichte, stabile und sichere Verbindung zwischen den Rohren oder Schläuchen erzielt wird. Mit der Erfindung ist es möglich, zwei Rohre auf einfache Art und Weise miteinander zu verbinden und auch wieder zu lösen.

Nachfolgend ist die Erfindung anhand eines Ausführungsbeispiels unter Bezugnahme auf die beigefügten Zeichnungen ausführlicher beschrieben. Es zeigen:
- Fig. 1: eine Seitenansicht des ersten Rohrs, das mit dem zweiten Rohr verbunden ist;
- Fig. 2: eine Schnittansicht entlang der in Fig. 1 dargestellten Schnittlinie B-B, wobei die Blickrichtung in Richtung des zweiten Rohres gerichtet ist;
- Fig. 3: eine Schnittansicht der erfindungsgemäßen Steckverbindung entlang der Achse des ersten Rohres und entlang der Achse des zweiten Rohres;
- Fig. 4: eine vergrößerte Ansicht des in Fig. 3 mit dem Kreis C gekennzeichneten Bereichs;
- Fig. 5: eine perspektivische Explosionsdarstellung zur Darstellung sämtlicher Bauteile der Steckverbindung mit dem ersten und dem zweiten Rohr;
- Fig. 6a - 6c: verschiedene Ansichten des zweiten Rohrs; und
- Fig. 7a - 7e: verschiedene Ansichten der Halteklammer für die Verbindung zwischen dem ersten und dem zweiten Rohr.

Für gleiche oder gleich wirkende Elemente der Erfindung werden identische Bezugszeichen verwendet. Das dargestellte Ausführungsbeispiel stellt lediglich eine Möglichkeit dar, wie die erfindungsgemäße Steckverbindung 1 zwischen einem ersten Rohr 2 und einem zweiten Rohr 3 ausgestaltet sein kann.

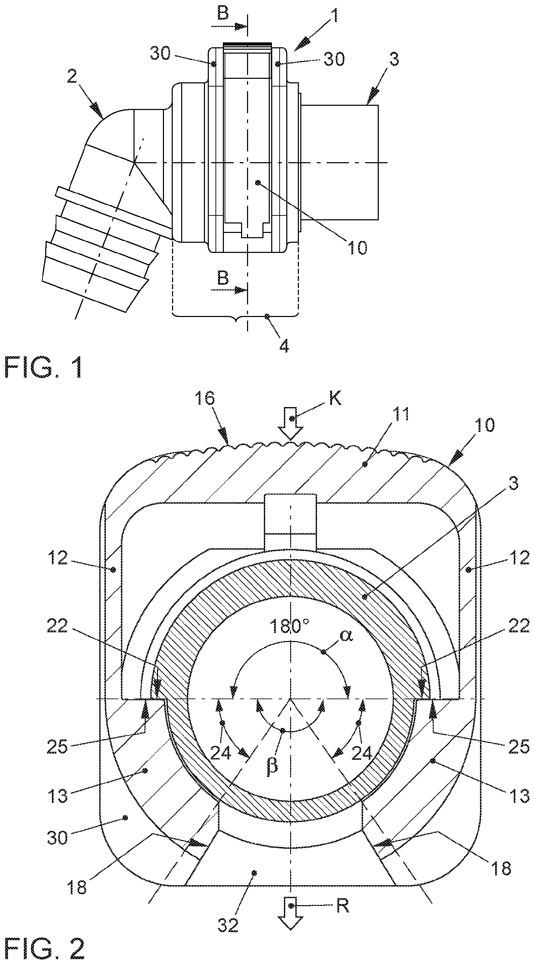

**Figur 1** zeigt eine Seitenansicht des ersten Rohrs 2, das mit dem zweiten Rohr 3 verbunden ist. In der hier gezeigten Ausführungsform ist das erste Rohr 2 als abgewinkeltes Rohrstück ausgebildet, das an einen Behälter (nicht dargestellt) angebracht sein kann. Dies soll jedoch nicht als Beschränkung der Erfindung aufgefasst werden. Für einen Fachmann ist es selbstverständlich, dass die gegenwärtige Erfindung mit beliebig geformten oder ausgestalteten Rohrstücken durchführbar ist. In eine Führung 30 des ersten Rohres 2 ist eine Halteklammer 10, die auf geeignete Weise die Verbindung zwischen dem ersten Rohr 2 und dem zweiten Rohr 3 sichert, eingesetzt. Die Führung 30 ist an einem freien Endabschnitt 4 des ersten Rohres 2 ausgeformt.

In **Figur 2** ist eine Schnittansicht entlang der in Fig. 1 dargestellten Schnittlinie B-B dargestellt, wobei die Blickrichtung in Richtung des zweiten Rohres 3 gerichtet ist. Die Halteklammer 10 befindet sich in Wirkstellung in der Führung 30 und sicherst so die Verbindung des ersten Rohrs 2 mit dem zweiten Rohr 3. Die Halteklammer 10 hat hierzu zwei Schenkel 12 ausgebildet, von denen jeder ein Verrastelement 13 trägt. Die beiden Schenkel 12 der Halteklammer 10 sind über einen Bügel 11 miteinander verbunden. Die Halteklammer 10 ist im Wesentlichen U-förmig ausgestaltet. Der verbindende Bügel 11 hat eine geriffelte Grifffläche 16 ausgebildet. Der freie Endabschnitt 5 des zweiten Rohres 3 besitzt einen Haltebereich 20, mit dem die Verrastelemente 13 form- und kraftschlüssig zusammenwirken. Der Haltebereich 20 hat am freien Endabschnitt 5 des zweiten Rohres 3 zwei gegenüberliegende Anschläge 22 ausgeformt, die mit einem entsprechenden Absatz 25 eines jeden Verrastelements 13 der Halteklammer 10 zusammenwirken. Ebenso liegen die Verrastelemente 13 zumindest teilweise an einem Sektorbereich 24 des Haltebereichs 20 an. Um die Verbindung zwischen dem ersten Rohr 2 mit dem zweiten Rohr 3 zu lösen, muss Druckkraft K auf die geriffelte Grifffläche 16 der Halteklammer 10 ausgeübt werden. Durch die Ausübung der Druckkraft werden die Schenkel 12 der Halteklammer 10 nach unten in Richtung R bewegt. Eine Anlage 18 eines jeden Verrastelements 13 gleitet an einem Keilelement 32 der Führung 30, wodurch die Schenkel 12 auseinandergedrückt werden. Die zwei gegenüberliegenden Anschläge 22 des freien Endabschnitts 5 des zweiten Rohres 3 gelangen somit außer Eingriff mit den Absätzen 25 eines jeden Verrastelements 13.

Die zwei gegenüberliegende Anschläge 22 des freien Endabschnitts 5 des zweiten Rohres 3 sind zueinander unter einem Winkel α zwischen 90° und 180° angebracht. Die Absätze 25 der beiden Verrastelemente 13 der Halteklammer 10 sind folglich unter einem entsprechend komplementären Winkel β angebracht. Bevorzugt betragen beide Winkel α und β 180°.

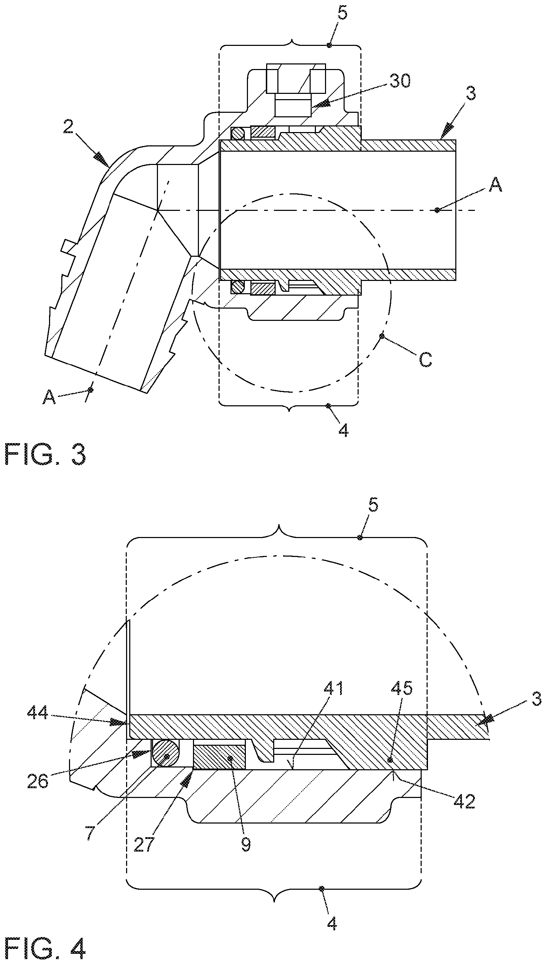

Eine Schnittansicht der erfindungsgemäßen Steckverbindung 1 entlang der Achse A des ersten Rohres 2 und entlang der Achse A des zweiten Rohres 3 ist in **Figur 3** dargestellt. Der freie Endabschnitt 4 des ersten Rohres 2 umgibt den freien Endabschnitt 5 des zweiten Rohres 3. Am freien Endabschnitt 4 des ersten Rohres 2 ist die Führung 30 ausgebildet, die die Halteklammer 10 aufnimmt, um somit das erste Rohr 2 mit dem zweiten Rohr 3 zu verbinden.

**Figur 4** zeigt eine vergrößerte Ansicht des in Fig. 3 mit dem Kreis C gekennzeichneten Bereichs. Der freie Endbereich 5 des zweiten Rohres 3 trägt einen O-Ring 7 und ein O-Ringhalteelement 9. Der O-Ring 7 liegt an einem ersten radial umlaufenden Absatz 26 einer Innenfläche 41 des freien Endabschnitts 4 des ersten Rohres 2 an. Das O-Ringhalteelement 9 liegt an einem zweiten radial umlaufenden Absatz 27 der Innenfläche 41 des freien Endabschnitts 4 des ersten Rohres 2 an. Somit sitzen im freien Endabschnitt 4 des ersten Rohres 2 geschützt der O-Ring 7 und das O-Ringhalteelement 9. Der O-Ring 7 wirkt dichtend mit der Innenfläche 41 des freien Endabschnitts 4 des ersten Rohres 2 und einer Außenfläche 42 des freien Endabschnitts 5 des zweiten Rohres 3 zusammen. Die Außenfläche 42 des freien Endabschnitts 5 des zweiten Rohres 3 ist dabei derart gestaltet, dass ein radiales, freies Ende 44 des freien Endabschnitts 5 auf den radial umlaufenden Absatz 26 aufliegt. Hinzu kommt, dass der freie Endabschnitt 5 des zweiten Rohres 3 in dem Bereich, an den sich das Rohr 3 anschließt, eine radial umlaufende Nase 45 ausgebildet hat, die flächig an der Innenfläche 41 des freien Endabschnitts 4 des ersten Rohres 2 anliegt.

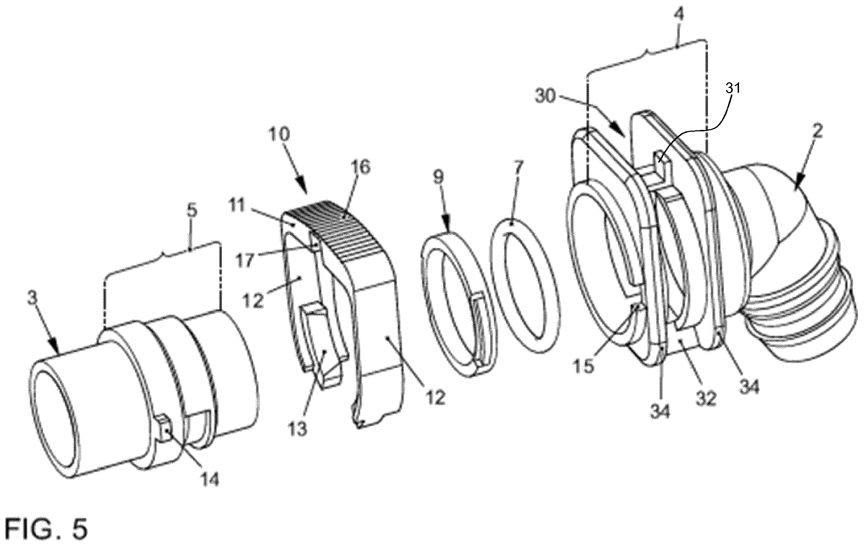

**Figur 5** zeigt eine perspektivische Explosionsdarstellung zur Darstellung sämtlicher Bauteile, die nötig sind, um eine funktionssichere Steckverbindung 1 zwischen dem ersten Rohr 2 und dem zweiten Rohr 3 herzustellen. Das erste Rohr 2 ist hier als abgewinkeltes Rohr ausgebildet. An dem freien Endabschnitt 4 des ersten Rohres 2 ist die Führung 30 für die Halteklammer 10 ausgebildet. Die Führung 30 besteht im Wesentlichen aus zwei, in ihren Außenabmessungen parallelen und plattenförmigen Elementen 34. Die plattenförmigen Elemente 34 entsprechen in Form und Größe in etwa der Form und Größe der U-förmigen Halteklammer 10. Die Halteklammer 10 selbst besteht aus einem verbindenden Bügel 11 für die zwei Schenkel 12. Unterhalb der Grifffläche 16 des Bügels 11 ist die Aussparung 17 ausgebildet ist, die mit einem Vorsprung 31 in der Führung 30 zusammenwirkt, wenn die Halteklammer 10 in die Führung 30 eingesetzt ist. Zwischen den plattenförmigen Elementen 34 ist das Keilelement 32 in der Führung 30 vorgesehen. Das Keilelement 32 unterstützt In Zusammenwirkung mit den Verrastelementen 13 der Halteklammer 10 die Demontage des ersten Rohres 2 und des zweiten Rohres 3.

Der freie Endabschnitt 5 des zweiten Rohres 3 trägt den O-Ring 7 und das O-Ringhalteelement 9. Ebenso hat der freie Endabschnitt 5 des zweiten Rohres 3 in dem Bereich, an den sich das Rohr 3 anschließt, eine radial abstehende Nase 14 ausgebildet, die für eine lagerichtige Verbindung zwischen dem ersten Rohr 2 und dem zweiten Rohr 3 in die am freien Endabschnitt 4 des ersten Rohres 2 ausgebildete Aussparung bei der Montage eingreift.

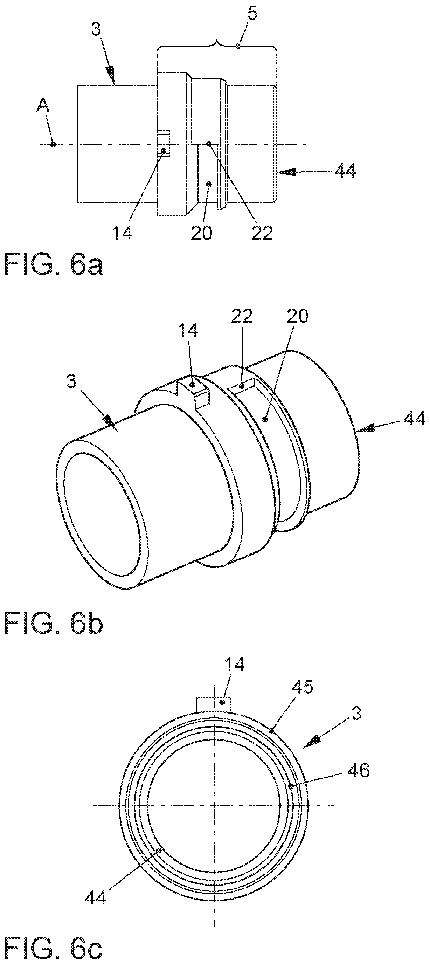

Die **Figuren 6a - 6c** zeigen verschiedene perspektivische Ansichten des zweiten Rohrs 3. Wie bereits erwähnt, dient die radial abstehende Nase 14 für eine lagerichtige Verbindung zwischen dem ersten Rohr 2 und dem zweiten Rohr 3. Der Haltebereich 20 ist im freien Endabschnitt 5 des zweiten Rohres 3 als eine sektorartige Vertiefung ausgebildet, die in radialer Richtung durch Anschläge 22 begrenzt ist. Figur 6c ist in der Blickrichtung auf den freien Endabschnitt 5 des zweiten Rohres 3 dargestellt. Hier ist deutlich die Zunahme der Außenabmessungen des freien Endabschnitts 5 zu erkennen. Ausgehend vom freien Ende 44 des freien Endabschnitts 5 bis hin zum freien Endabschnitt 5 des zweiten Rohres 3, an den sich das Rohr 3 anschließt, weisen die am freien Endabschnitt 5 ausgebildeten Elemente, wie z.B. radial umlaufende Nase 45 oder ein radial umlaufenden Montagevorsprung 46, zunehmen-de Außenabmessungen auf.

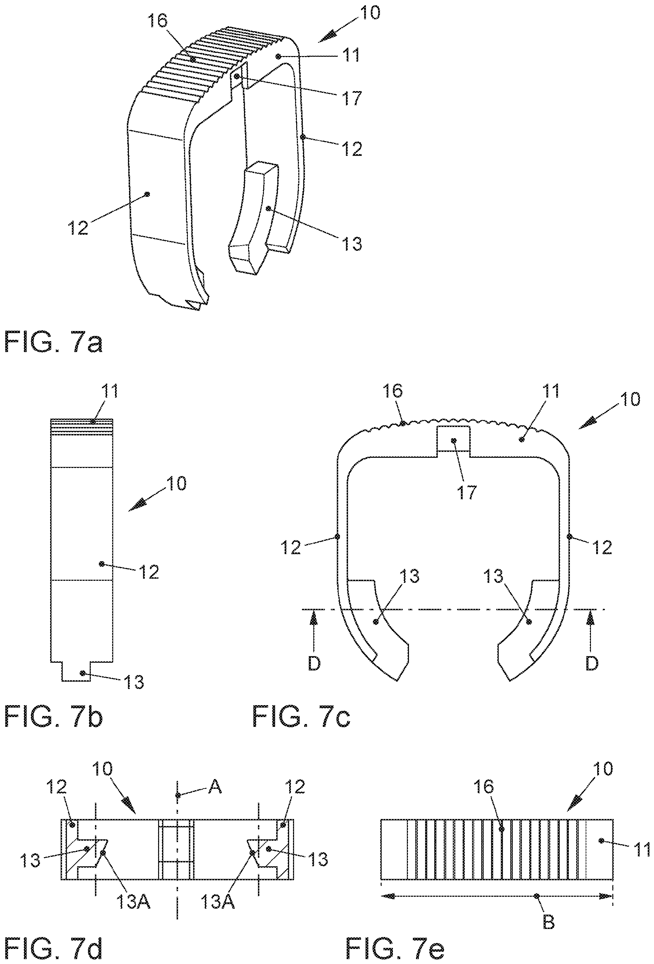

In den **Figuren 7a - 7e** sind verschiedene Ansichten der Halteklammer 10 für die Verbindung zwischen dem ersten Rohr 2 und dem zweiten Rohr 3 dargestellt. Die Halteklammer 10 ist im Wesentlichen U-förmig ausgestaltet. Der die Schenkel 12 verbindende Bügel 11 trägt die geriffelte Grifffläche 16. Über die geriffelte Grifffläche 16 wird auf die Halteklammer 10 eine Kraft ausgeübt, so dass die Verrastelemente 13 der Schenkel 12 außer Eingriff mit dem Haltebereich 20 am freien Endabschnitt 5 des zweiten Rohres 3 gebracht werden. Die Darstellungen der **Figuren 7b** und **7c** zeigen, dass sich die Verrastelemente 13 über die Schenkel 12 hinaus erstrecken. Ferner sind die Verrastelemente 13 als ringförmige Segmente ausgebildet, so dass die Verrastelemente 13 an die äußere Form des Haltebereichs 20 angepasst sind. Die in **Figur 7d** gezeigte Darstellung ist eine Schnittdarstellung entlang der in **Figur 7c** gezeigten Schnittline D-D. Die Verrastelemente 13 haben in Richtung der Achse A eine Abschrägung 13A, um somit den Anlagebereich am Haltebereich 20 zu begrenzen. Wie aus **Figur 7e** zu erkennen ist, erstreckt sich die geriffelte Grifffläche 16 über den größten Teil der Breite B der Halteklammer 10.

### Bezugszeichenliste

- 1: Steckverbindung
- 2: erstes Rohr
- 3: zweites Rohr
- 4: freier Endabschnitt
- 5: freier Endabschnitt
- 7: O-Ring
- 9: O-Ringhalteelement
- 10: Halteklammer
- 11: Bügel
- 12: Schenkel
- 13: Verrastelement
- 13A: Abschrägung
- 14: Nase
- 15: Aussparung
- 16: Grifffläche
- 17: Aussparung
- 18: Anlage
- 20: Haltebereich
- 22: Anschlag
- 24: Sektorbereich
- 25: Absatz
- 26: radial umlaufender Absatz
- 27: radial umlaufender Absatz
- 30: Führung
- 31: Vorsprung
- 32: Keilelement
- 34: plattenförmige Elemente
- 41: Innenfläche
- 42: Außenfläche
- 44: freies Ende
- 45: radial umlaufende Nase
- 46: Montagevorsprung
- A: Achse
- B: Breite
- B-B: Schnittlinie
- C: Kreis
- K: Druckkraft
- R: Richtung
- α: Winkel
- β: Winkel

## Patentansprüche

1. Steckverbindung (1) für ein erstes Rohr (2) und ein zweites Rohr (3) umfassend eine Halteklammer (10) mit zwei Schenkeln (12,;
eine Führung (30) für die Halteklammer (10), die am freien Endabschnitt (4) des ersten Rohres (2) ausgeformt ist; **gekennzeichnet durch**
• je ein Verrastelement (13), das jeder Schenkel (12) trägt;
• einen Haltebereich (20), der am freien Endabschnitt (5) des zweiten Rohres (3) als sektorartige Vertiefung mit zwei gegenüberliegenden Anschlägen (22) ausgeformt ist; und
• einen Absatz (25), den jedes Verrastelement (13) der Halteklammer (10) besitzt, wobei die in der Führung (30) sitzende Halteklammer (10) mit jedem Verrastelement (13) form- und kraftschlüssig an der sektorartigen Vertiefung des Haltebereichs (20) anliegt und wobei die entsprechenden Absätze (25) der Verrastelemente (13) an den Anschlägen (22) der sektorartigen Vertiefung anliegen.

2. Steckverbindung (1) nach Anspruch 1, wobei der Endabschnitt (5) des zweiten Rohres (3) eine Nase (14) ausgeformt hat, die in eine Aussparung (15) des Endabschnitts (4) des ersten Rohres (2) greift, so dass ein lagerichtiger Verbau des ersten Rohres (2) mit dem zweiten Rohr (3) gegeben ist.

3. Steckverbindung (1) nach Anspruch 1, wobei die Verrastelemente (13) zumindest teilweise an einem Sektorbereich (24) des Haltebereichs (20) anliegen.

4. Steckverbindung (1) nach den vorangehenden Ansprüchen 1-3, wobei die zwei gegenüberliegenden Anschläge (22) zueinander unter einem Winkel (α) zwischen 90° und 180° und die beiden Absätze (25) der Verrastelemente (13) der Halteklammer (10) unter einem entsprechend komplementären Winkel (β) angebracht sind.

5. Steckverbindung (1) nach den vorangehenden Ansprüchen, wobei der freie Endabschnitt (5) des zweiten Rohres (3) einen O-Ring (7) und ein O-Ringhalteelement (9) trägt und der O-Ring (7) und das O-Ringhalteelement (9) im freien Endabschnitt (4) des ersten Rohres (2) sitzen und geschützt sind, wobei der O-Ring (7) dichtend mit einer Innenfläche (41) des freien Endabschnitts (4) des ersten Rohres (2) und der einer Außenfläche (42) des freien Endabschnitts (5) des zweiten Rohres (3) zusammenwirkt.

6. Steckverbindung (1) nach Anspruch 1, wobei ein die zwei Schenkel (12) der Halteklammer (10) verbindender Bügel (11) eine geriffelte Grifffläche (16) ausgebildet hat, wobei unterhalb der Grifffläche (16) mindestens eine Aussparung (17) ausgebildet ist und die Führung (30) für die Halteklammer (10) einen Vorsprung (32) ausgeformt hat, der bei der in die Führung (30) eingesetzten Halteklammer (10) in die Aussparung (17) der Halteklammer (10) greift und so einen lagerichtigen Sitz der Halteklammer (10) bereitstellt.

7. Verfahren zur Montage einer Steckverbindung (1) für ein erstes Rohr (2) und ein zweites Rohr (3), **gekennzeichnet durch** die folgenden Schritte:
• Einschieben eines freien Endabschnitts (5) des zweiten Rohres (3) in einen freien Endabschnitt (4) des ersten Rohres (2); und
• Einsetzen einer Halteklammer (10) in eine Führung (30) am freien Endabschnitt (4) des ersten Rohres (2), so dass zwei Schenkel (12), von denen jeder ein Verrastelement (13) trägt, form- und kraftschlüssig mit einer sektorartigen Vertiefung zusammenwirken, und zwei gegenüberliegende Anschläge (22) eines Haltebereichs (20) am freien Endabschnitt (5) des zweiten Rohres (3) mit je einem Absatz (25) eines jeden Verrastelements (13) zusammenwirken, so dass das erste Rohr (2) mit dem zweiten Rohr (3) verbunden wird.

8. Verfahren nach Anspruch 7, wobei der Endabschnitt (5) des zweiten Rohres (3) eine Nase (14) ausgeformt hat und der Endabschnitt (5) des zweiten Rohres (3) derart in den Endabschnitt (4) des ersten Rohres (2) eingeführt wird, dass die Nase (14) in eine Aussparung (15) des Endabschnitts (4) des ersten Rohres (2) greift, so dass ein lagerichtiger Verbau des ersten Rohres (2) mit dem zweiten Rohr (3) erreicht wird.

9. Verfahren nach den Ansprüchen 7 und 8, wobei die Halteklammer (10) in die Führung (30) bei den zusammengesetzten freien Endabschnitten (4, 5) des ersten Rohres (2) bzw. des zweiten Rohres (3) derart eingesetzt wird, dass die Verrastelemente (13) an den Schenkeln (12) der Halteklammer (10) mit zwei im Haltebereich (20) am freien Endabschnitt (5) des zweiten Rohres (3) ausgeformten und gegenüberliegenden Anschlägen (22) zusammenwirken und die Verrastelemente (13) zumindest teilweise an einem Sektorbereich (24) des Haltebereichs (20) anliegen.

10. Verfahren nach den Ansprüchen 7 bis 9, wobei der freie Endabschnitt (5) des zweiten Rohres (3) mit einem O-Ring (7) und einem O-Ring Halteelement (9) versehen wird und der O-Ring (7) und das O-Ring Halteelement (9) im freien Endabschnitt (4) des ersten Rohres (2) sitzen und geschützt sind, wobei der O-Ring (7) dichtend mit einer Innenfläche (41) des freien Endabschnitts (4) des ersten Rohres (2) und der einer Außenfläche (42) des freien Endabschnitts (5) des zweiten Rohres (3) zusammenwirkt.

11. Verfahren nach Anspruch 7, wobei eine Demontage der Steckverbindung (1) dadurch erreicht wird, dass auf eine geriffelte Grifffläche (16) der in der Führung (30) sitzenden Halteklammer (10) gedrückt wird und die Verrastelemente (13) der Schenkel (12) über ein Keilelement (32) der Führung (30) in Zusammenwirkung mit je einer Anlage (18) der Verrastelemente (13) außer Eingriff mit dem Haltebereich (20) am freien Endabschnitt (5) des zweiten Rohres (3) gebracht werden und so das erste Rohr (2) und das zweite Rohr (3) auseinandergezogen werden können.

## Claims

1. Plug-in connection (1) for a first pipe (2) and a second pipe (3) comprising a holding bracket (10) with two legs (12);
a guide (30) for the holding bracket (10) formed at the free end portion (4) of the first pipe (2);
**characterized by**
one each of a locking element (13) supported by each leg (12);
a holding region (20) formed at the free end portion (5) of the second pipe (3) as a sector-like depression with two opposite stops (22), and
a shoulder (25), which each of the locking elements (13) of the holding bracket (10) has, wherein the holding bracket (10) seated in the guide (30) form-fittingly and force-fittingly abuts the sector-like depression of the holding region (20) with each locking element (13) and wherein the respective shoulders (25) of the locking elements (13) abut the stops (22) of the sector-like depression.

2. Plug-in connection (1) according to claim 1, wherein the end portion (5) of the second pipe (3) has formed a nose (14) which engages into a recess (15) of the end portion (4) of the first pipe (2) so that a correctly positioned fitting of the first pipe (2) with the second pipe (3) is provided.

3. Plug-in connection (1) according to claim 1, wherein the locking elements (13) at least partially abut a sector region (24) of the holding region (20).

4. Plug-in connection (1) according to anyone of the preceding claims 1 to 3, wherein the two opposite stops (22) are positioned at an angle (α) to one another between 90° and 180° and the two shoulders (25) of the locking elements (13) of the holding bracket (10) are positioned at a respective complementary angle (β).

5. Plug-in connection (1) according to anyone of the preceding claims, wherein the free end portion (5) of the second pipe (3) supports an O-ring (7) and an O-ring holding element (9), and the O-ring (7) and the O-ring holding element (9) are seated in the free end portion (4) of the first pipe (2) and are protected, the O-ring (7) sealingly engaging the inner surface (41) of the free end portion (4) of the first pipe (2) and the outer surface (42) of the free end portion (5) of the second pipe (3).

6. Plug-in connection (1) according to claim 1, wherein on a bar (11) connecting the two legs (12) of the holding bracket (10) a corrugated grip surface (16) is formed, wherein at least one recess (17) is formed below the grip surface (16), and the guide (30) for the holding bracket (10) has formed a protrusion (32) which engages into the recess (17) of the holding bracket (10) when the holding bracket (10) is seated in the guide (30) and thus provides correctly positioned seating of the holding bracket (10).

7. Method for assembling a plug-in connection (1) for a first pipe (2) and a second pipe (3),
**characterized by the following steps:**
pushing a free end portion (5) of the second pipe (3) into a free end portion (4) of the first pipe (2); and
inserting a holding bracket (10) into a guide (30) at the free end portion (4) of the first pipe (2) so that two legs (12), each of which supporting a locking element (13), form-fittingly and force-fittingly engage a sector-like depression, and two opposite stops (22) of a holding region (20) at the free end portion (5) of the second pipe (3) engage a shoulder (25) of each locking element (13), respectively, so that the first pipe (2) is connected with the second pipe (3).

8. Method according to claim 7, wherein the end portion (5) of the second pipe (3) has formed a nose (14), and the end portion (5) of the second pipe (3) is inserted into the end portion (4) of the first pipe (2) so that the nose (14) engages into a recess (15) of the end portion (4) of the first pipe (2) so that a correctly positioned fitting of the first pipe (2) with the second pipe (3) is accomplished.

9. Method according to anyone of claims 7 and 8, wherein the holding bracket (10) is inserted into the guide (30) at the assembled free end portions (4, 5) of the first pipe (2) and the second pipe (3), respectively, so that the locking elements (13) on the legs (12) of the holding bracket (10) engage two opposite stops (22) formed in the holding region (20) on the free end portion (5) of the second pipe (3) and the locking elements (13) at least partially abut a sector region (24) of the holding region (20).

10. Method according to anyone of claims 7 to 9, wherein the free end portion (5) of the second pipe (3) is provided with an O-ring (7) and an O-ring holding element (9), and the O-ring (7) and the O-ring holding element (9) are seated in the free end portion (4) of the first pipe (2) and are protected, the O-ring (7) sealingly engaging an inner surface (41) of the free end portion (4) of the first pipe (2) und an outer surface (42) of the free end portion (5) of the second pipe (3).

11. Method according to claim 7, wherein a disassembly of the plug-in connection (1) is accomplished by pushing onto a corrugated grip surface (16) of the holding bracket (10) seated in the guide (30) and the locking elements (13) of the legs (12) are disengaged from the holding region (20) on the free end portion (5) of the second pipe (3) by a wedge element (32) of the guide (30) cooperating with an abutment (18) of the locking elements (13); and thus the first pipe (2) and the second pipe (3) can be pulled apart.

## Revendications

1. Raccord à emboîtement (1) pour un premier tube (2) et un second tube (3), comprenant
un étrier de retenue (10) ayant deux branches (12) ;
un guidage (30) destiné à l'étrier de retenue (10), qui est formé sur la partie d'extrémité (4) libre du premier tube (2) ;
**caractérisé par**
un élément de verrouillage (13) que porte chacun des branches (12) ;
une zone de retenue (20) qui est formée sur la partie d'extrémité (5) libre du second tube (3) en tant que renfoncement en forme de secteur avec deux butées (22) opposées, et
un épaulement (25) que possède chaque élément de verrouillage (13) de l'étrier de retenue (10), l'étrier de retenue (10) logé dans le guidage (30) étant en appui contre le renfoncement en forme de secteur de la zone de retenue (20), par liaison de forme et de force, au moyen de chaque élément de verrouillage (13), et les épaulements (25) respectifs des éléments de verrouillage (13) étant en appui contre les butées (22) du renfoncement en forme de secteur.

2. Raccord à emboîtement (1) selon la revendication 1, dans lequel la partie d'extrémité (5) du second tube (3) a formé un nez (14) s'engageant dans un évidement (15) de la partie d'extrémité (4) du premier tube (2) de sorte qu'un assemblage en position correcte du premier tube (2) et du second tube (3) est réalisé.

3. Raccord à emboîtement (1) selon la revendication 1, dans lequel les éléments de verrouillage (13) sont au moins partiellement en appui contre une zone sectorielle (24) de la zone de retenue (20).

4. Raccord à emboîtement (1) selon une des revendications précédentes 1 à 3, dans lequel les deux butées (22) opposées sont montées l'une par rapport à l'autre sous un angle (α) compris entre 90° et 180°, et les deux épaulements (25) des éléments de verrouillage (13) de l'étrier de retenue (10) sont montés sous un angle (β) complémentaire correspondant.

5. Raccord à emboîtement (1) selon une des revendications précédentes, dans lequel la partie d'extrémité (5) libre du second tube (3) porte un joint torique (7) et un élément de retenue de joint torique (9), et le joint torique (7) et l'élément de retenue de joint torique (9) sont logés dans la partie d'extrémité (4) libre du premier tube (2) et sont protégés, le joint torique (7) coopérant, de façon étanche, avec une surface intérieure (41) de la partie d'extrémité (4) libre du premier tube (2) et avec l'une surface extérieure (42) de la partie d'extrémité (5) libre du second tube (3).

6. Raccord à emboîtement (1) selon la revendication 1, dans lequel un étrier (11) reliant les deux branches (12) de l'étrier de retenue (10) a formé une surface de préhension (16) striée, au moins un évidement (17) étant formé au-dessous de la surface de préhension (16), et le guidage (30) destiné à l'étrier de retenue (10) ayant formé une saillie (32) s'engageant dans l'évidement (17) de l'étrier de retenue (10), lorsque l'étrier de retenue (10) est inséré dans le guidage (30), et fournissant ainsi un logement en position correcte de l'étrier de retenue (10).

7. Procédé de montage d'un raccord à emboîtement (1) pour un premier tube (2) et un second tube (3),
**caractérisé par les étapes suivantes:**
introduire une partie d'extrémité (5) libre du second tube (3) dans une partie d'extrémité (4) libre du premier tube (2), et
insérer un étrier de retenue (10) dans un guidage (30) situé sur la partie d'extrémité (4) libre du premier tube (2) de sorte que deux branches (12) dont chacune porte un élément de verrouillage (13) coopèrent, par liaison de forme et de force, avec un renfoncement en forme de secteur, et que deux butées (22) opposées d'une zone de retenue (20) située sur la partie d'extrémité (5) libre du second tube (3) coopèrent avec un épaulement (25) de chacun des éléments de verrouillage (13) de sorte que le premier tube (2) est relié au second tube (3).

8. Procédé selon la revendication 7, dans lequel la partie d'extrémité (5) du second tube (3) a formé un nez (14), et la partie d'extrémité (5) du second tube (3) est introduite dans la partie d'extrémité (4) du premier tube (2) de telle manière que le nez (14) s'engage dans un évidement (15) de la partie d'extrémité (4) du premier tube (2) de sorte qu'un assemblage en position correcte du premier tube (2) et du second tube (3) est obtenu.

9. Procédé selon une des revendications 7 et 8, dans lequel l'étrier de retenue (10) est inséré dans le guidage (30), lorsque les parties d'extrémité (4, 5) libres du premier tube (2) et du second tube (3) sont assemblées, de telle manière que les éléments de verrouillage (13) situés sur les branches (12) de l'étrier de retenue (10) coopèrent avec deux butées (22) opposées qui sont formées dans la zone de retenue (20) sur la partie d'extrémité (5) libre du second tube (3), et que les éléments de verrouillage (13) sont au moins partiellement en appui contre une zone sectorielle (24) de la zone de retenue (20).

10. Procédé selon une des revendications 7 à 9, dans lequel la partie d'extrémité (5) libre du second tube (3) est munie d'un joint torique (7) et d'un élément de retenue de joint torique (9), et le joint torique (7) et l'élément de retenue de joint torique (9) sont logés dans la partie d'extrémité (4) libre du premier tube (2) et sont protégés, le joint torique (7) coopérant, de façon étanche, avec une surface intérieure (41) de la partie d'extrémité (4) libre du premier tube (2) et avec l'une surface extérieure (42) de la partie d'extrémité (5) libre du second tube (3).

11. Procédé selon la revendication 7, dans lequel le démontage du raccord à emboîtement (1) est obtenu en appuyant sur une surface de préhension (16) striée de l'étrier de retenue (10) logé dans le guidage (30), et en dégageant les éléments de verrouillage (13) des branches (12) de la zone de retenue (20) située sur la partie d'extrémité (5) libre du second tube (3) par un élément de calage (32) du guidage (30) en coopération avec un appui (18) de chacun des éléments de verrouillage (13), le premier tube (2) et le second tube (3) pouvant ainsi être désolidarisés.
